Europäisches Patentamt

European Patent Office

Office européen des brevets

(11) Publication number: **0 118 824**
**B1**

# (12) EUROPEAN PATENT SPECIFICATION

(45) Date of publication of patent specification: **04.11.87**

(51) Int. Cl.⁴: **F 16 H 13/08**

(21) Application number: **84102069.6**

(22) Date of filing: **28.02.84**

(54) Mechanism to shift cycle and direction.

(30) Priority: **28.02.83 TR 1397/83**

(43) Date of publication of application:
**19.09.84 Bulletin 84/38**

(45) Publication of the grant of the patent:
**04.11.87 Bulletin 87/45**

(84) Designated Contracting States:
**AT DE FR GB IT SE**

(56) References cited:
**DE-C- 893 599**
**FR-A-2 101 992**
**US-A-2 383 107**
**US-A-3 631 742**

**PRODUCT ENGINEERING, vol. 41, no. 26, 7th December 1970, pages 89-90, Morgan-Grampian Publishing Corp., New York, US; "Precision ball bearings replace gears in tiny speed reducers"**

(73) Proprietor: **Iyikocak, Ali Riza**
**Kücükbahce Sokak 9/1**
**Sisli/Istanbul (TR)**

(72) Inventor: **Iyikocak, Ali Riza**
**Kücükbahce Sokak 9/1**
**Sisli/Istanbul (TR)**

(74) Representative: **LOUIS, PÖHLAU, LOHRENTZ & SEGETH**
**Kesslerplatz 1 P.B. 3055**
**D-8500 Nürnberg (DE)**

(56) References cited:
**RUSSIAN ENGINEERING JOURNAL, vol. 52, no. 8, 1972, pages 22-23, Production Engineering Research Association, Melton, Mowbray, GB; P.A.GROMOV et al.: "Low-power standard ball-bearing speed reducers and multipliers"**

Courier Press, Leamington Spa, England.

## Description

The invention relates to a thrust bearing mechanism comprising at least one thrust bearing which is provided with two races and a ball-cage for receiving the balls interposed between said two races, said thrust bearing being shiftable between forward and reverse speed and various speed-ratios by holding either said cage or the one race or the other race fixed to a body wherein said two races are input and output members.

Such a mechanism may be used in shifting at specific speed ratios:
—asynchronous motors with lower powers
—low-power motors with spontaneous ignition
—electric motors used in hand tools
—hand tools with motors
—mechanisms of forward-backward movement
—machine tools, conveyors and conveyance units.

A thrust bearing mechanism as mentioned above is known from US—A—23 83 107 which forms the precharacterizing part of claim 1. This known mechanism comprises two thrust bearings the one race of the first thrust bearing is fixedly mounted to a fixed cup means, and the second race of said first thrust bearing is fixed to a motor shaft. The balls (rollers) which are interposed between said one race and said second race of said first thrust bearing are arranged in recesses which are provided in a ball-cage of said first thrust bearing. Said ball-cage is connected with a rotably mounted cup which forms one race of a second thrust bearing, the second race of said second thrust bearing is fixedly mounted to said fixed cup means. Balls (rollers) are interposed between said one race and said second race of said second thrust bearing and they are arranged in recesses of a second ball-cage. Said second ball-cage is connected with a driven shaft. In this known mechanism said one race of said first thrust bearing and said second race of said second thrust bearing are not moveable. Furthermore said driving shaft as well as said driven shaft are not moveable in axial direction thereof. The slippage of the balls (rollers) of said first and second thrust bearing is controlled by an adjustable compression means which is provided inside the mechanism. Different ratios can be obtained by shifting dog clutches.

The object of the invention is to provide a thrust bearing mechanism which ensures:
—low production costs
—an easy manufacturing
—relatively small volume
—relatively high yield
—long life
—quiet working conditions without strokes
—ease of repair and maintenance.

This is accomplished by the provision of the characterizing part of claim 1.

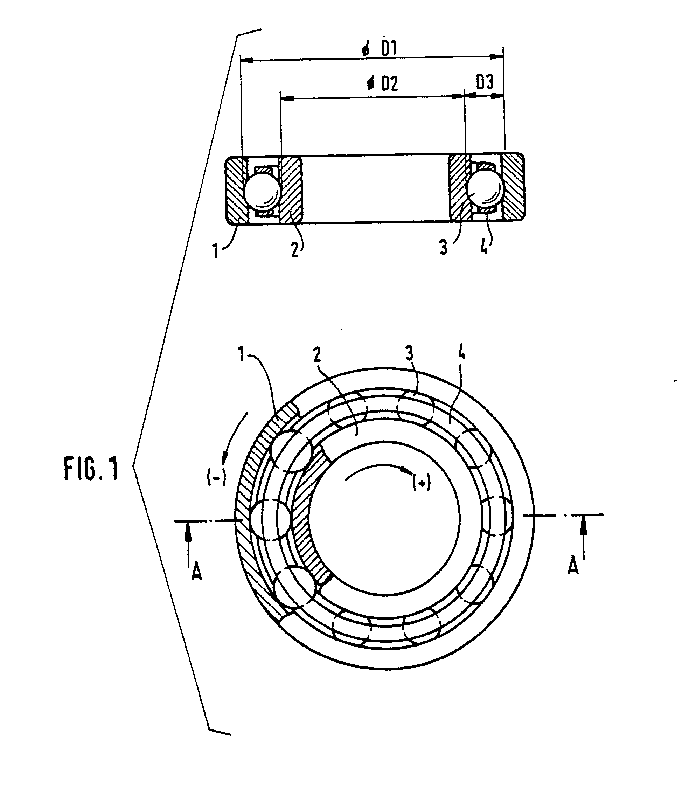

The features of the invention are shown in the following figures. The ball bearings, shown in figure 1 may be utilized as friction wheel mechanism. Main elements of ball bearing are an outer race 1, an inner race 2, balls 3 and a ball-cage 4.

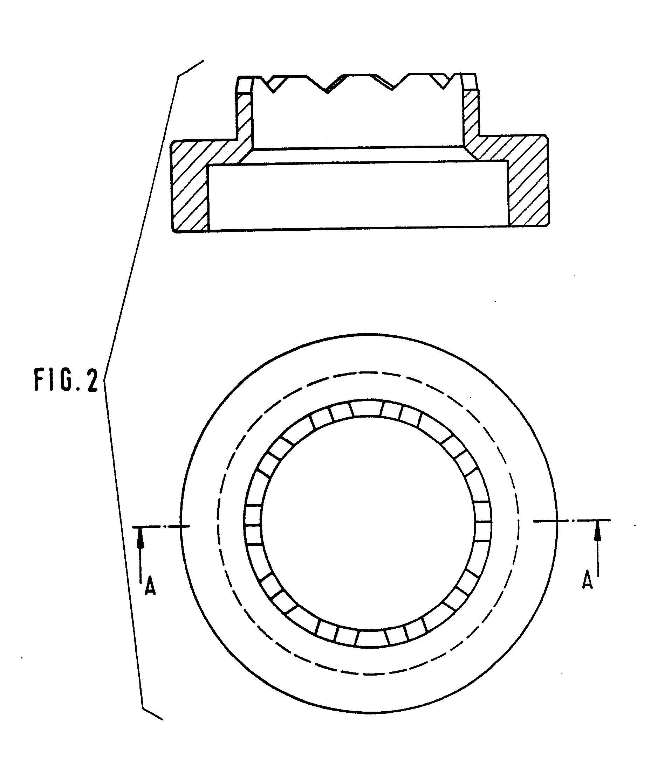

Functioning of the system as a simple mechanism:
—claws of the part with claws seen in the figure 2 are inserted into gaps in the ball-cage 4
—the part with claws is held fixed and the inner race 2 is rotated in the positive direction
—balls 3 rotate in the negative direction
—the outer race 1 also rotates in the negative direction (drive may be supplied from outer race).

Functioning of the system as a planet mechanism:
—the outer race 1 is held fixed
—the inner race 2 is rotated in positive direction
—the part with claws rotates also in positive direction (drive may be supplied from the part with claws)
—the inner race 2 is held fixed
—the outer race 1 is rotated in positive direction
—the part with claws rotates also in positive direction (drive may be supplied from the part with claws)
—formulas to supply kinematical relations of such types of planet mechanisms are used in calculating speed ratio and in determining direction of rotation.

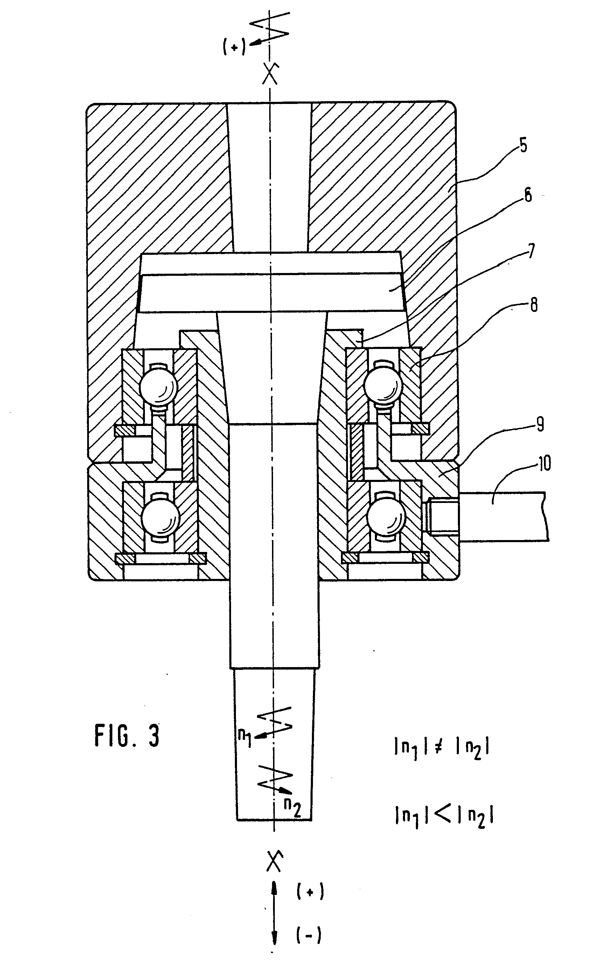

Figure 3 shows a body 5, a double-direction coupling shaft 6, a reversing collar 7, a ball-bearing 8 to shift speed ratio and direction of rotation, a ring 9 to hold ball-cage (part with claws) by an arm 10 on the ring 9.

The body 5 of the mechanism to shift direction and speed ratio seen in figure 3 is made to rotate in positive direction about the axis x—x, the outer race of ball bearing 8 fitted tight to the body turns also in positive direction. Claws of the ring to hold ball cage 9 are inserted into ball-cage gaps of the ball bearing 8. The inner race will turn in negative direction as ball cage is held fixed. The reversing collar 7 is fitted tight to the inner race of the ball bearing to shift direction of rotation is turned also in the negative direction. Double direction coupling shaft is spaced in such a manner to allow rotation inside the reversing collar 7. Coupling shaft 6 will contact conical surface of the body 5 and will turn in the positive direction when the same is moved axially and upwardly (positive). Coupling shaft 6 will turn in negative direction by contacting with conical surface of reversing collar 7, when the same shaft is moved axially and downwardly (negative direction). Cone angles of the coupling and sizes of ball bearings are calculated in conformity with the torque to be transmitted and the speed ratios. Shifting of rotational direction may be ensured by moving in axial direction the body 5 or the coupling shaft 6, depending upon the purpose of utilization.

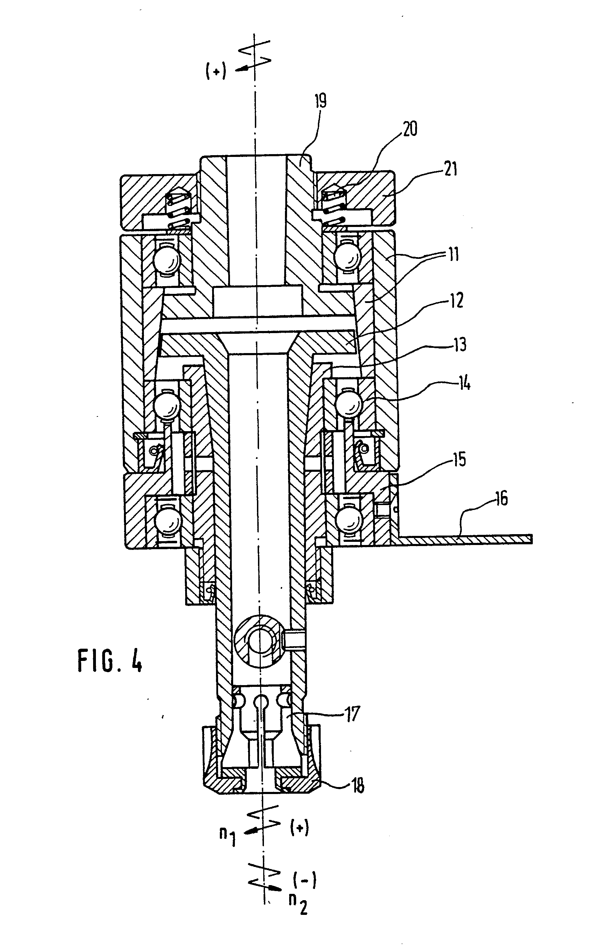

Reference is now made to figure 4 which shows the design of a complete mechanism to shift direction of rotation and speed ratio equipped with a safety clutch with adjustable torque transmission.

Figure 4 shows a body 11, a double direction coupling shaft 12, a reversing collar 13, a ball bearing 14 to shift direction of rotation and speed ratio, a ring 15 to hold ball-cage (part with claws), an arm 16 of the ring to hold ball-cage, chuck 17, a nut 18 to tighten up the chuck, a safety clutch 19, a compression spring 20 and a compression adjustment nut 21 to adjust the safety clutch.

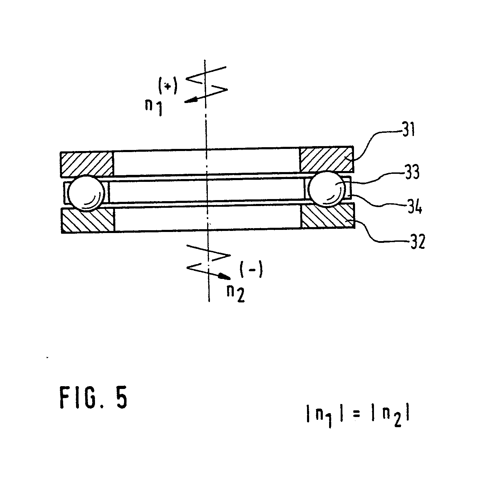

The thrust bearing, shown in figure 5 may be used as friction wheel mechanism.

This figure shows a ring 31 to rotate, a ring 32 rotated, balls 33 and a ball-race 34.

The ball-cage 34 of the thrust-bearing in the figure 5 is held fixed and if the ring 31 rotates in a positive direction the ring 32 rotates in a negative direction. On account of these characteristics, the thrust-bearing may be used as mechanism to shift direction of rotation.

## Claims

1. A thrust bearing mechanism comprising at least one thrust bearing (14) which is provided with two races (1, 2) and a ball-cage (4) for receiving the balls (3) interposed between said two races, said thrust bearing being shiftable between forward and reverse speed and various speed-ratios by holding either said cage (4) or the one race (1) or the other race (2) fixed to a body (1) wherein said two races (1, 2) are input and output members, characterized in that an input and/or output shaft (12) comprises cone clutches, one of said cone clutches being able to cooperate with said outer race (1), and the other of said cone clutches being able to cooperate with said inner race (2), wherein shifting is carried out by a translation of said body (11) relative to said input/output shaft (12).

2. Mechanism according to claim 1, characterized in that said body (11) is provided with a safety clutch (19), taking movement from drive means and moving directly in the positive and negative directions around the longitudinal axis of said input/output shaft (12); and in that a ball bearing is fitted tight to said body (11) and in that there is torque transmission between said body (11) and the safety clutch (19) which is adjustable by means of compression springs (20) and an adjusting nut (21).

3. Mechanism according to claims 1 or 2, characterized in that the thrust bearing (8, 14) is fitted tight to said body (11), a part with claws (15) is fitted to the ball cage (4) of said thrust bearing (4), a ring of the part (15) with claws is fitted tight to one bearing race, another bearing supports the claws of the part (15) with claws, and an intermediate part is provided in the space between the two bearing races of said thrust bearing (14) and in that an arm (16) prevents rotation of said part (15) with claws and said compression nut (11).

4. Mechanism according to anyone of the preceding claims, characterized in that a double direction coupling shaft is provided, the reverse rotation thereof being possible by a small movement, this shaft being spaced in such a manner to allow revising, taking movement in the reverse direction from the reversing collar when it touches the inner race of said thrust bearing (14) and from the body (11) when it touches the body (11).

## Patentansprüche

1. Axialdrucklagervorrichtung mit mindestens einem axialen Drucklager (14), das zwei Laufringe (1, 2) und einen zur Aufnahme der Kugeln vorgesehenen Kugelkäfig (4) aufweist, der zwischen den beiden Laufringen (1, 2) angeordnet ist, wobei das axiale Drucklager durch Festhalten entweder des Käfigs (4) oder des einen oder anderen an einem Körper (11) befestigten Laufringes (1 bzw. 2) zwischen einer Vorwärts- und einer Rückwärtsbewegung und verschiedenen Geschwindigkeitsverhältnissen umschaltbar ist, wobei die beiden Laufringe (1, 2) Eingangs- und Ausgangselemente sind, dadurch gekennzeichnet, dass eine Eingangs- und/oder Ausgangswelle (12) konische Kupplungen aufweist, wobei ein konische Kupplung mit dem äusseren Laufring (1) und die andere konische Kupplung mit dem inneren Laufring (2) workverbindbar ist und die Umschaltung durch Verstellung des Körpers (11) relativ zur Eingangs/Ausgangswelle erfolgt.

2. Vorrichtung nach Anspruch 1, dadurch gekennzeichnet, dass der mit einer Sicherungskupplung (19) versehene Körper (11) durch eine Antriebseinrichtung angetrieben wird und sich in positiver bzw. negativer Richtung um die Längsachse der Eingangs/Ausgangswelle (12) dreht, und dass in den Körper (11) ein Kugellager eng eingepasst ist, so dass zwischen dem Körper (11) und der mittels Druckfedern (20) und einer Einstellmutter (21) einstellbaren Sicherungskupplung eine Drehmomentübertragung erfolgt.

3. Vorrichtung nach Anspruch 1 oder 2, dadurch gekennzeichnet, dass das axiale Drucklager (8, 14) in den Körper (11) eingepasst ist, dass ein Teil mit Klauen (15) zum Kugelkäfig (4) des axialen Drucklager (14) passt, dass ein Ring des Klauenteils (15) eng in einen Lagerlaufring eingepasst ist und ein anderes Lager das Klauenteil (15) trägt, und dass im Raum zwischen den beiden Lagerlaufringen des axialen Drucklagers (14) ein Zwischenteil vorgesehen ist und ein Arm (16) eine Drehung des Klauenteils (15) und der Druckmutter (21) verhindert.

4. Vorrichtung nach einem der vorhergehenden Ansprüche, dadurch gekennzeichnet, dass eine in beide Drehrichtungen drehbare Kupplungswelle vorgesehen ist, deren Rückwärtsdrehung durch eine kleine Bewegung möglich ist, wobei die Welle in einer solchen Weise beabstandet ist, dass eine Unkehr möglich ist, und die Bewegung bei der Rückwärtsdrehung vom Umkehrring genommen wird, wenn der Umkehrring den inneren Laufring des axialen Drucklagers (14) berührt, bzw. vom Körper (11), wenn der Umkehrring den Körper (11) berührt.

## Revendications

1. Mécanisme à palier de butée comprenant au moins un palier de butée (14) qui comporte deux bagues (1, 2) et une cage à billes (4) pour recevoir les billes (3) interposées entre les deux bagues, ledit palier pouvant changer de vitesse entre marche avant et marche arrière et pouvant établir divers rapports de vitesses en maintenant soit ladite cage (4), soit l'une des bagues (1), ou l'autre bague (2), fixe par rapport à un corps (11), lesdites dxux bagues (1, 2) formant les organes d'entrée et de sortie,

caractérisé en ce qu'un arbre d'entrée et/ou de sortie (12) comporte des embrayages à cône, l'un de ces embrayages à cône étant adapté à coopérer avec la bague extérieure (1), et l'autre de ces embrayages à cône étant adapté à coopérer avec la bague intérieure (2), dans lequel le changement de vitesse est effectué par une translation dudit corps (11) par rapport audit arbre d'entrée/sortie (12).

2. Mécanisme suivant la revendication 1, caractérisé en ce que le corps (11) est pourvu d'un accouplement de sécurité (19), qui reçoit son mouvement des moyens d'entraînement et se meut directement, dans les directions positive et négative, autour de l'axe longitudinal dudit arbre d'entrée/sortie (12); en ce qu'un palier à billes est adjusté serré dans ledit corps (11) et en ce qu'il y a une transmission de couple entre ledit corps (11) et l'accouplement de sécurité (19), lequel est ajustable grâce à des ressorts de compression (20) et à un écrou de réglage (21).

3. Mécanisme suivant la revendication 1 ou 2, caractérisé en ce que: le palier de butée (8, 14) est adjusté serré dans le corps (11), une pièce (15) pourvue de griffes est accouplée à la cage à billes (4) dudit palier de butée, une couronne de la pièce (15) pourvue de griffes est ajustée serrée sur une bague de palier, un autre palier supporte les griffes de la pièce (15) pourvue de griffes, et une partie intermédiaire est prévue dans l'intervalle entre les deux bagues dudit palier de butée (14), et en ce qu'un bras (16) empêche la rotation de ladite pièce (15) pourvue de griffes et dudut écrou de compression (11).

4. Mécanisme suivant l'une quelconque des revendications précédentes, caractérisé en ce qu'il est prévu un arbre d'accouplement bidirectionnel, la rotation en sens inverse de celui-ci étant produite par un petit déplacement, cet arbre étant espacé de manière à permettre l'inversion, en prenant le mouvement dans la direction inverse à partir du collier inverseur lorsqu'il touche la bague intérieure dudit palier de butée (14) et à partir du corps (11) lorsqu'il touche le corps (11).

FIG.1

FIG.2

FIG. 3

$|n_1| \neq |n_2|$

$|n_1| < |n_2|$

FIG. 4

FIG. 5

$|n_1| = |n_2|$